# FASCICULE DE BREVET EUROPEEN

(11) **EP 4 063 190 B1**
(45) Date de publication et mention de la délivrance du brevet: **18.02.2026**
(21) Numéro de dépôt: 22164118.6
(22) Date de dépôt: 24.03.2022
(51) Int. Cl.: B29C 43/00, B29B 17/00, B60N 2/60, B29C 70/02, B29C 70/46, B29C 70/84, B29C 70/86, B29L 31/00

(54) **ELÉMENT DE PROTECTION DE SIÈGE, SIÈGE ET PROCÉDÉ DE FABRICATION ASSOCIÉS**
SCHUTZELEMENT EINES SITZES, ENTSPRECHENDER SITZ UND ENTSPRECHENDES HERSTELLUNGSVERFAHREN
ELEMENT FOR PROTECTING A SEAT, ASSOCIATED SEAT AND MANUFACTURING METHOD

(30) Priorité: 26.03.2021 FR 2103092
(43) Date de publication de la demande: 28.09.2022
(73) Titulaire: FAURECIA Sièges d'Automobile, 92000 Nanterre (FR)
(72) Inventeur: CABOUILLET, Anne-Sophie, 91870 BOISSY-LE-SEC (FR); GAZANIOL, Benoit, 91290 ARPAJON (FR); MAIRE, Anthony, 25200 MONTBELIARD (FR)
(74) Mandataire: Novagraaf Group

(56) Documents cités:
- EP-B1- 2 670 590
- DE-B3- 102006 005 369
- JP-U- S6 099 141
- US-A1- 2015 027 622

## Description

La présente invention concerne un élément de protection d'un siège d'un véhicule comprenant un corps.

L'élément de protection est, par exemple, destiné à protéger un élément de siège d'objets extérieurs au siège. En l'absence d'un élément de protection, de tels objets extérieurs risquent de dégrader l'élément de siège. Ces objets extérieurs sont par exemple des objets solides coupant ou contondant ou encore des liquides salissant ou présentant des caractéristiques physico-chimiques pouvant abimer l'élément de siège.

Le corps de l'élément de protection est, par exemple, également destiné à protéger un utilisateur de pièces internes au siège. Cela est par exemple le cas lorsque lesdites pièces internes au siège présentent des arrêtes et des côtés pouvant être saillants. L'élément de protection constitue alors une couche de protection entre de telles pièces internes et le corps de l'utilisateur. A cet effet, l'élément de protection forme par exemple une coque s'étendant sur tout ou partie d'une surface externe de l'élément de siège à protéger et doit présenter des caractéristiques mécaniques, notamment une dureté, adaptées à ces fonctions de protection.

JP S60 99141 U divulgue une portion de véhicule comprenant un coffre et un siège arrière.

DE 10 2006 005369 B3 divulgue un procédé de fabrication d'une pièce d'isolation phonique moulée.

US 2015/027622 A1 divulgue un procédé de fabrication d'une pièce de revêtement intérieur.

Il est connu de l'état de la technique des éléments de protection de siège dont le corps est réalisé à partir de matériaux bruts, par exemple, issus de ressources naturelles. Le corps est par exemple composé de matériaux organiques, minéraux ou synthétiques. Le corps est, par exemple, réalisé en plastique.

Toutefois, il est alors complexe d'assurer une dureté adéquate du corps tout en limitant sa masse.

L'un des buts de l'invention est de pallier cet inconvénient en proposant un élément de protection de siège dont la dureté est optimisée et dont la masse est réduite.

A cet effet, l'invention concerne un élément de protection d'un siège de véhicule, selon la revendication 1.

L'utilisation d'éléments discrets de structure pour constituer le corps de l'élément de support permet d'éviter de recourir à l'utilisation classique d'un matériau plastique. Le mélange des éléments discrets de structure et des fibres de liaison est aisé et permet de moduler la dureté du corps de manière simple et précise tout en limitant le poids du corps.

En outre, les éléments discrets de structure peuvent provenir de sources variées ce qui multiplie les options de procédé de fabrication de l'élément de protection. Cela évite par exemple l'utilisation d'un plastique issu de ressources naturelles.

Optionnellement, l'élément de protection est selon l'une quelconque des revendications 2 à 7.

L'invention concerne, en outre, un siège d'un véhicule selon la revendication 8.

L'invention concerne, en outre, un procédé de fabrication d'un élément de protection d'un siège d'un véhicule, selon la revendication 9.
Optionnellement, le procédé de fabrication est selon la revendication 10.

D'autres aspects et avantages de l'invention apparaîtront à la lecture de la description qui suit, donnée à titre d'exemple et faite en référence aux dessins annexes, dans lesquels :
- La Figure 1 est une représentation schématique de côté d'un siège de véhicule selon l'invention ;
- La Figure 2 est une représentation schématique en coupe selon l'épaisseur d'un élément de protection du siège de la Figure 1 ; et
- La Figure 3 est représentation schématique simplifiée de la couche de structure de l'élément de protection de la Figure 2, composée d'éléments discrets de structure et de fibres de liaisons.

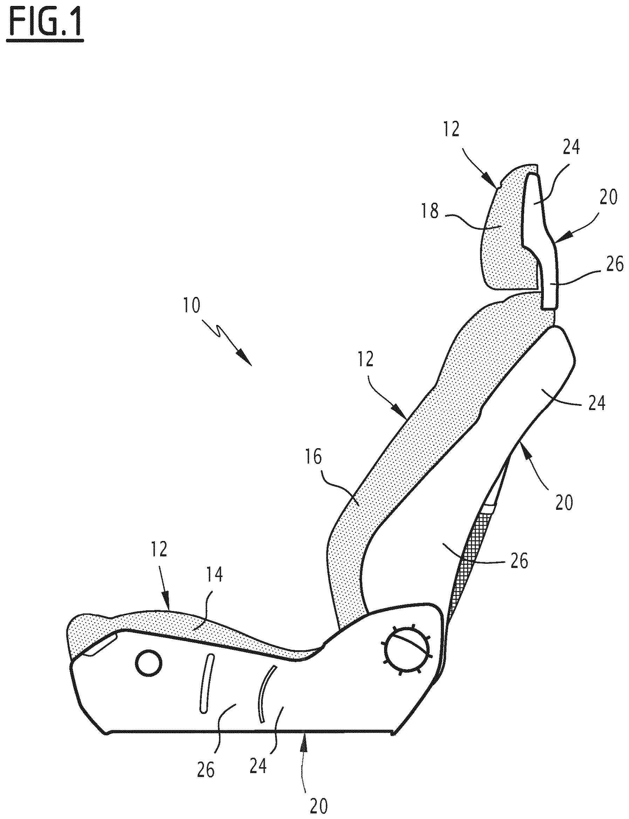

En référence à la Figure 1, on décrit un siège 10 de véhicule. Le siège 10 est, par exemple, un siège d'un véhicule terrestre, maritime ou aérien. Le siège 10 est, par exemple, un siège de véhicule automobile.

Le siège 10 est destiné à recevoir un utilisateur du siège 10.

Le siège 10 comprend au moins un élément de support 12 destiné à supporter le corps de l'utilisateur.

Le siège 10 comprend, par exemple, plusieurs éléments de support 12.

L'élément de support 12 est une assise 14, un dossier 16 ou un appui-tête 18 du siège 10. Il est entendu qu'un même siège 10 peut comprendre plusieurs éléments de support 12 selon l'invention.

Le siège 10 comprend, en outre, au moins un élément de protection 20 s'étendant sur au moins une partie de l'élément de support 12.

L'élément de protection 20 est fixé sur un élément de support 12 du siège 10.

Par exemple, l'élément de protection 20 épouse la forme de la partie de l'élément de support 12 sur laquelle il s'étend.

Comme illustré sur la Figure 1, un élément de protection 20 s'étend respectivement sur au moins une partie de chacun des assise 14, dossier 16 et appui-tête 18.

L'élément de protection 20 comprend un corps 24.

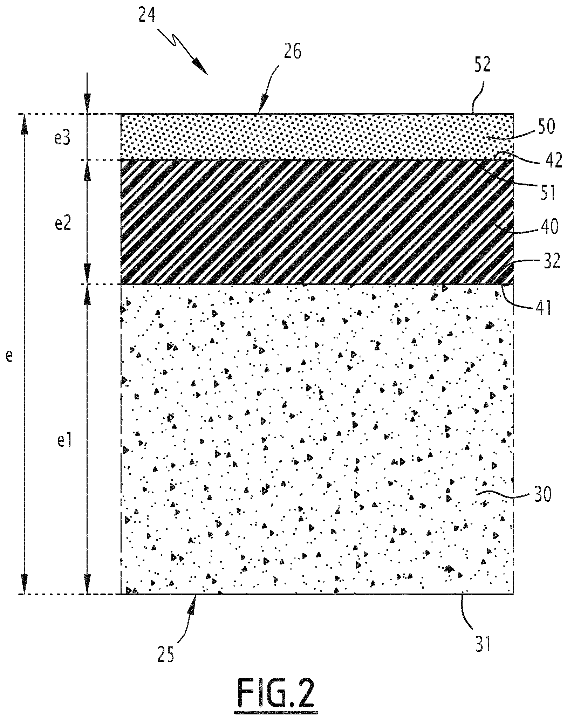

En référence à la Figure 2, le corps 24 est fin. Par « fin », on entend que le corps 24 s'étend dans trois dimensions, une de ces trois dimensions (correspondant à une épaisseur e du corps 24) étant très inférieure aux deux autres dimensions (correspondant à une largeur et à une longueur du corps 24). L'épaisseur e est, par exemple, comprise entre 1 mm et 15 mm. Les rapports longueur/épaisseur et largeur/épaisseur sont, par exemple, compris entre 50 et 500. En outre, une dimension moyenne de l'élément de support 12 est, par exemple, comprise entre 100 mm et 1 000 mm. Ainsi, le corps 24 est également considéré fin par rapport à l'élément de support 12 qu'il protège.

Le corps 24 présente une dureté sensiblement supérieure ou égale à 50 shore A, de préférence comprise entre 50 shore A et 90 shore A. Une telle dureté est mesurée selon la norme ISO 868 :2003. Une telle dureté permet à l'élément de protection 20 de protéger efficacement l'élément de support 12 du siège sur lequel il s'étend en formant une coque doublant cet élément de support 12.

Le corps 24 présente une rigidité sensiblement supérieure ou égale à 3 N/30mm, de préférence entre 3 N/30mm, encore de préférence entre 3 et 25 N/30mm.

Le corps 24 comprend une surface interne 25 et une surface externe 26 opposée à la surface interne 25. La surface interne 25 est tournée vers l'élément de support 12 du siège 10 lorsque l'élément de protection 20 est fixé à l'élément de support 12. La surface externe 26 constitue la surface d'aspect de l'élément de protection 20. La surface interne 25 est, par exemple, appliquée contre l'élément de support 12 et la surface externe 26 est, par exemple, tournée vers l'extérieur par rapport à l'élément de support 12. L'épaisseur e correspond à la distance entre la surface interne 25 et la surface externe 26.

Le corps 24 comprend au moins une couche de structure 30. En outre, le corps 24 comprend des moyens de fixations (non-illustrés) destinés à assurer la fixation du corps 24 avec l'élément de support 12 qu'il est destiné à protéger. Les moyens de fixations sont, par exemple, solidaire de la couche de structure 30. Les moyens de fixations sont, par exemples, venus de matière avec la couche de structure 30. En variante, les moyens de fixations sont rapportés sur la couche de structure 30 et maintenus sur la couche de structure 30 par une soudure ou un collage. Encore en variante, les moyens de fixation sont surmoulés sur la couche de structure 30. Les moyens de fixation sont, par exemple, en matière plastique standard ou recyclée.

Optionnellement, le corps 24 comprend au moins une peau 40.

Encore optionnellement, le corps 24 comprend au moins une couche de revêtement 50.

La Figure 2 illustre un exemple dans lequel le corps 24 comprend une couche de structure 30, une peau 40 et une couche de revêtement 50.

La couche de structure 30 comporte une face interne 31 et une face externe 32. La face interne 31 est tournée vers l'élément de support 12 lorsque l'élément de protection 20 est fixé sur ledit élément de support 12. La face externe 32 est opposée à la face interne 31 et tournée vers l'extérieur du siège 10 lorsque l'élément de protection 20 est fixé sur l'élément de support 12. Lorsque le corps 24 est dépourvu de peau 40 et de couche de revêtement 50, la face externe 32 de la couche de structure 30 forme la surface externe 26 du corps 24.

La couche de structure 30 présente une épaisseur e1 correspondant à la distance entre la face interne 31 et la face externe 32. L'épaisseur e1 de la couche de structure 30 est, par exemple, comprise entre 1 mm et 15 mm.

La couche de structure 30 comporte une pluralité d'éléments discrets de structure 34 et une pluralité de fibres de liaison 35.

Les éléments discrets de structure 34 sont formés par un matériau de structure en mousse et/ou en fibres de structure et/ou en textile.

Par exemple, les éléments discrets de structure 34 sont formés par un matériau de structure en mélange de mousse et de fibres de structure ou en mélange de mousse et de textile ou en mélange de fibres de structure et de textile ou en mélange de mousse, de fibres de structure et de textile. Les éléments discrets de structure 34 sont, par exemple, formés par le matériau de structure découpé et broyé.

Le matériau de structure est, par exemple, un matériau obtenu à partir d'un objet en mousse et/ou en fibres de structure et/ou en textile. Le matériau de structure est alors dit être obtenu par recyclage dudit objet. Ceci permet de réduire l'impact environnemental de l'élément de protection 20 puisque le matériau de structure n'est pas issu de ressources brutes puisées dans l'environnement.

En variante ou en complément, le matériau de structure est, par exemple, issu d'une chute de matériau lors de la réalisation d'un objet en mousse et/ou en fibres de structure et/ou en textile. Le matériau est alors issu d'excédents lors de la fabrication de l'objet. Ceci permet également de réduire l'impact environnemental de l'élément de protection 20. En effet, l'utilisation des excédents réduit le gaspillage de ressources. En outre, l'utilisation des excédents contribue à la réduction d'émissions de dioxyde de carbone dans l'atmosphère puisqu'il est ainsi évité d'incinérer lesdits excédents. En outre, l'utilisation des excédents contribue à la réduction de la pollution des sols puisqu'il est évité d'enfouir lesdits excédents.

La mousse du matériau de structure est, par exemple, une mousse en polyuréthane (PU). Les fibres de structure du matériau de structure sont, par exemple, des fibres plastiques comme par exemple des fibres en polyéthylène téréphtalate (PET). Le textile du matériau de structure est, par exemple, un textile simple, dit également textile nu, tel qu'un non-tissé ou un textile complexe, tel qu'un textile laminé qui comprend une couche de textile et, par exemple, une couche de mousse.

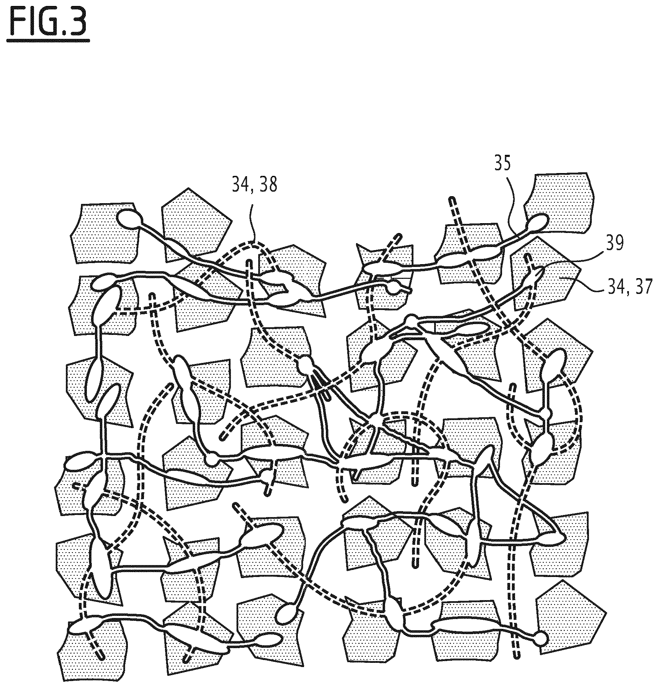

Comme illustré sur la Figure 3, les éléments discrets de structure 34 sont, par exemple, sous la forme de flocons 37 de matériau ou granules de matériau. Un tel flocon 37 de matériau constitue alors un élément discret de structure 34 au sens de l'invention. Un tel flocon 37 de matériau est, en particulier, formé par de la mousse et/ou du textile et/ou un mélange de mousse et de textile. Les flocons 37 présentent, par exemple, une dimension comprise entre 5 mm et 30 mm, préférentiellement égale à 10 mm. Cette dimension est par exemple le diamètre moyen du flocon 37 ou sa dimension selon sa direction d'allongement pour un élément allongé ou autre.

Comme illustré sur la Figure 3, les éléments discrets de structure 34 sont, par exemple, des brins 38. Un tel brin 38 constitue alors un élément discret de structure 34 au sens de l'invention. Un tel brin 38 est, en particulier, une fibre de structure telle que décrite précédemment. Les brins 38 présentent, par exemple, une dimension comprise entre 30 mm et 120 mm. Cette dimension est, par exemple, la dimension d'un brin 38 selon sa direction d'allongement. Les brins 38 présentent, par exemple, un titrage compris entre 6 dtex et 17 dtex.

La proportion d'éléments discrets de structure 34 représente par exemple entre 50 % et 90 % en masse de la couche de structure 30, préférentiellement entre 70 % et 90 % en masse. La proportion de fibres de liaison 35 représente, par exemple, entre 10% et 50% en masse de la couche de structure 30, préférentiellement entre 10 % et 30 % en masse.

Selon un mode de réalisation, la proportion d'éléments discrets de structure 34 varie d'une partie de la couche de structure 30 à une autre.

Les éléments discrets de structure 34 participent à la dureté du corps 24. En particulier, en variant la proportion d'éléments discrets de structure 34 et, en outre, en variant la composition des éléments discrets de structure 34, il est possible de moduler avec précision la dureté du corps 24. Par « varier la composition », on entend varier la composition du matériau de structure en variant des proportions de mousse et/ou des proportions de fibres de structure et/ou des proportions de textile.

Comme illustré sur la Figure 3, les éléments discrets de structure 34 sont solidarisés entre eux par l'intermédiaire des fibres de liaison 35 pour former la partie 34 du corps 24.

Les fibres de liaison 35 sont, par exemple, des fibres thermoplastiques.

En particulier, les fibres de liaison 35 sont des fibres bicomposantes. Elles comprennent une âme centrale et une enveloppe recouvrant l'âme centrale.

Les fibres de liaison 35 sont, par exemple, réalisées en au moins deux polymères ayant des caractéristiques différentes. L'âme est, par exemple, réalisée en un premier polymère et l'enveloppe est réalisée en un deuxième polymère. Les premier et deuxième polymères sont, par exemple, le même polymère mais avec des caractéristiques différentes (même formule chimique, mais caractéristiques physico-chimiques distinctes). Selon une variante, les premier et deuxième polymères sont des polymères différents (formules chimiques différentes). Selon encore une autre variante, les premier et deuxième polymères sont des polymères appartenant à la même famille de polymères. Par exemple, le premier polymère est un polyester et le deuxième polymère est un co-polyester. Selon un autre exemple, le premier polymère est un polyamide et le deuxième polymère est un co-polyamide.

L'enveloppe est en particulier réalisée en un matériau fondant lorsqu'il est soumis à une température de fonte. En d'autres termes, le deuxième polymère présente une température de fusion sensiblement égale à la température de fonte. La température de fonte est, par exemple, comprise entre 70°C et 200°C.

Comme illustré sur la Figure 3, l'enveloppe des fibres de liaison 35 comprend au moins une portion d'attache 39 fixée à au moins un élément discret de structure 34 et/ou à au moins une autre fibre de liaison 35.

Les fibres de liaisons 35 sont fixées à un élément discret de structure 34 et/ou à une autre fibre de liaison 35 par l'intermédiaire des portions d'attaches 39.

En d'autres termes, les fibres de liaison 35 agissent comme une colle entre les éléments discrets de structure 34. Après l'exposition de la couche de structure à une température de fonte, l'enveloppe a fondu et s'est solidifiée à nouveau pour assurer la fixation avec les éléments discrets de structure 34 et/ou les autres fibres de liaison 35. En particulier, les portions d'attache 39 ont fondu et se sont solidifiés à nouveau pour assurer cette fixation.

Les fibres de liaison 35, en plus d'assurer la fixation des éléments discrets de structure 37 entre eux, participent à la dureté du corps 24. Elles assurent également une bonne cohésion de la couche de structure 30 et améliorent ses propriétés mécaniques.

La dureté du corps 24 est donc modulée avec précision en variant, en outre, les proportions de fibres de liaison 35 par rapport à la proportion d'éléments discrets de structure 34.

Les fibres de liaison 35 et les fibres de structure sont, par exemple, des fibres thermoplastiques. Selon un exemple, les fibres de liaison 35 et les fibres de structure sont des fibres réalisées en polyéthylène. Selon une variante, les fibres de liaison 35 et les fibres de structure sont des fibres réalisées en polyéthylène téréphtalate.

Contrairement aux fibres de liaison 35, les fibres de structure qui constituent les brins 38 comprennent une âme mais sont dépourvues d'une enveloppe recouvrant ladite âme. En d'autres termes, les fibres de structure sont formées par une âme nue. L'âme nue ne fond pas lorsqu'elle est soumise à la température de fonte.

Selon un exemple particulier, les éléments discrets de structure 34 sont formés par un matériau uniquement en fibres de structure en polyéthylène téréphtalate (PET) et les fibres de liaison 35 sont formées par du PET pour le premier polymère et du co-polyéthylène téréphtalate (coPET) pour le deuxième polymère.

Les éléments discrets de structure 34 et les fibres de liaison 35 sont comprimés. Par exemple, les éléments discrets de structure 34 et les fibres de liaison 35 sont comprimés de sorte que la couche de structure 30 présente une densité comprise entre 150 kg/m³ et 850 kg/m³, préférentiellement entre 500 kg/m³ et 700 kg/m³.

La dureté du corps 24 dépend au moins en partie de la compression des éléments discrets de structure 34 et des fibres de liaison 35, de la proportion en masse de fibres de liaison 35 dans la couche de structure 30 ou encore du type ou bien de la taille des éléments discrets de structure 34. Ces paramètres peuvent être modulés pour conférer au corps 24 une dureté appropriée selon le cas.

La peau 40 comporte une face interne 41 et une face externe 42. Comme illustré sur la Figure 2, la face interne 41 de la peau 40 s'étend sur au moins une partie de la face externe 32 de la couche de structure 30 et adhère à celle-ci.

A cet effet, la peau 40 est formée par un matériau synthétique. Plus particulièrement, la peau 40 s'apparente à une couche de mousse non cellulaire, c'est-à-dire dépourvue de cellules. En d'autres termes, la peau 40 ne contient pas de bulles d'air. Il convient de noter que la peau 40 peut contenir des bulles d'air résiduelles, dont la présence est due au procédé d'application de la peau 40 qui sera décrit ultérieurement.

La peau 40 est, par exemple, réalisée en un matériau élastomérique, par exemple, un matériau résultant d'une réaction polyol-isocyanate. Selon un mode de réalisation, la peau 40 est réalisée en polyuréthane sensiblement non cellulaire. Ainsi, la peau 40 présente un comportement similaire à un textile enduit de plastique (PET) ou à du similicuir.

La peau 40 est, par exemple, formée par un matériau en PU sensiblement non-cellulaire.

La peau 40 est relativement flexible par rapport à la couche de structure 30. Par « flexible », on entend que la peau 40 est sensiblement déformable lorsqu'un effort est appliqué dessus.

La peau 40 présente une épaisseur e2 correspondant à la distance entre sa face interne 41 et sa face externe 42. L'épaisseur e2 de la peau 40 est, par exemple, comprise entre 0,1 mm et 3 mm, de préférence entre 0,5 mm et 2 mm.

La peau 40 présente, par exemple, une densité comprise entre 400 kg/m³ et 1 500 kg/m³, de préférence entre 800 kg/m³ et 1 200 kg/m³.

La peau 40 présente, par exemple, une résistance à la traction comprise entre 1 MPa et 50 MPa, de préférence entre 3 MPa et 15 MPa. Cette résistance à la traction est mesurée selon la norme DIN EN ISO 527-3:2018.

La peau 40 présente, par exemple, une résistance à la déchirure comprise entre 0,5 N/mm et 30 N/mm, de préférence entre 4 N/mm et 30 N/mm, encore de préférence entre 6 N/mm et 30 N/mm. Cette résistance à la déchirure est mesurée selon la norme DIN EN ISO 13937-2:2000.

Lorsque le corps 24 comprend également une couche de revêtement 50, la peau 40 forme un support pour cette couche de revêtement 50.

Lorsque le corps 24 est dépourvu de couche de revêtement 50, la face externe 42 de la peau 40 forme la surface externe 26 du corps 24. Par exemple, le matériau de la peau 40 comprend alors des pigments de couleur. La peau 40 constitue alors la surface d'aspect de l'élément de protection 20.

La couche de revêtement 50 comporte une face interne 51 et une face externe 52. Comme illustré sur la Figure 2, la face interne 51 de la couche de revêtement 50 s'étend sur au moins une partie de la face externe 42 de la peau 40.

La couche de revêtement 50 est formée par un matériau de revêtement. Le matériau de revêtement est, par exemple, une peinture à base d'eau ou une peinture à base de solvant. Par « peinture à base de solvant », on entend que la peinture comprend majoritairement un composé organique comme agent solvant. Préférentiellement, le matériau de revêtement est une peinture à base d'eau.

Le matériau de revêtement est apte à adhérer sur la peau 40 lorsque la peau 40 est appliquée sur la couche de revêtement 50.

Selon une variante, la couche de revêtement 50 est appliquée directement sur la couche de structure 30 sans peau 40 intermédiaire.

La couche de revêtement 50 présente une épaisseur e3 correspondant à la distance entre sa face interne 51 et sa face externe 52. L'épaisseur e3 de la couche de revêtement 50 est, par exemple, comprise entre 5 µm et 120 µm, de préférence entre 10 µm et 80 µm. L'épaisseur e3 est mesurée à sec.

La couche de revêtement 50 constitue une couche d'aspect décorative. La couche de revêtement 50 présente ainsi une couleur et une brillance participant à l'esthétique de l'élément de protection 20.

Selon un exemple particulier, la couche de revêtement 50 est formée par une pluralité de sous-couches, cette pluralité de sous-couches comprenant au moins une sous-couche de base et au moins une sous-couche de vernissage.

Par exemple, le matériau de revêtement présente des caractéristiques physico-chimique lui fournissant une résistance aux rayures, une résistance au vieillissement, une résistance aux variations de température et/ou une résistance aux agressions chimiques.

Par exemple, la couche de revêtement 50 présente un motif, tel qu'un grainage, un logo ou autre, ce motif étant, par exemple, formée sur la face externe 52 de la couche de revêtement 50 au cours de la réalisation de l'élément de protection 20, comme il sera décrit plus bas.

Dans ce qui suit, on décrit un procédé de fabrication d'un élément de protection 20 tel que décrit précédemment.

L'élément de protection 20 est réalisé dans un premier outil de réalisation. Lorsque l'élément de protection 20 comprend une peau 40 et une couche de revêtement 50, l'élément de protection 20 est réalisé dans le premier outil de réalisation et dans un deuxième outil de réalisation.

Au cours d'une première étape, une pluralité d'éléments discrets de structure 34 et une pluralité de fibres de liaison 35 sont fournies.

Cette première étape comprend, par exemple, le découpage et le broyage du matériau de structure. Par exemple, il s'agit, en particulier, du découpage et du broyage d'un élément de support de siège considéré comme étant un déchet. Selon un autre exemple ou en complément, il s'agit du découpage et du broyage de chute de matériaux lors de la réalisation d'un objet.

Au cours d'une deuxième étape, les éléments discrets de structure 34 et les fibres de liaison 35 sont mélangés pour former un ensemble de fabrication. En particulier, les éléments discrets de structure 34 et les fibres de liaison 35 sont mélangés dans des proportions spécifiques de sorte que la dureté du corps 24 soit sensiblement supérieure ou égale à 50 shore A.

Le procédé comprend ensuite une troisième étape de formation du corps 24 à partir de l'ensemble de fabrication. La formation du corps 24 comprend la disposition de l'ensemble de fabrication dans le premier outil de réalisation, par exemple dans un moule, en particulier dans une cavité de moulage dudit moule. La cavité de moulage du moule présente, par exemple, la forme de la couche de structure 30 du corps 24 à réaliser. La disposition de l'ensemble de fabrication est, par exemple, effectuée par soufflage de l'ensemble de fabrication dans le moule. La disposition de l'ensemble de fabrication dans le moule est, par exemple, suivi d'un soufflage d'air dans le moule pour disperser et mélanger l'ensemble de fabrication dans le moule.

La formation du corps 24 comprend la solidarisation des éléments discrets de structure 34 entre eux par l'intermédiaire des fibres de liaison 35.

La solidarisation des éléments discrets de structure 34 entre eux par l'intermédiaire des fibres de liaison 35 comprend une compression de l'ensemble de fabrication dans le moule et un chauffage de l'ensemble de fabrication dans le moule à la température de fonte pour fondre au moins partiellement les fibres de liaison 35, en particulier l'enveloppe des fibres de liaison 35. En particulier, les portions d'attaches 39 des fibres de liaison 35 entre lesdites fibres et des éléments discrets de structure 34 et/ou d'autres fibres fondent au moins partiellement pour assurer la fixation entre les fibres de liaison 35 et les éléments discrets de structure 34.

La solidarisation des éléments discrets de structure 34 entre eux par les fibres de liaison 35 comprend, en outre, un refroidissement de l'ensemble de fabrication. L'enveloppe auparavant fondue se solidifie à nouveau pour assurer la fixation avec les éléments discrets de structure 34 et/ou les autres fibres de liaison 35. En particulier, les portions d'attache 39 auparavant fondues se solidifient à nouveau pour assurer cette fixation. Les portions d'attache 39 constituent ainsi des portions où sont fixées les fibres de liaison 35 et les éléments discrets de structure 34. Le refroidissement a lieu dans le premier outil de réalisation.

Le refroidissement de l'ensemble de fabrication est, par exemple, actif. Par exemple, le refroidissement est réalisé par des moyens de refroidissement du premier outil de réalisation.

En variante, le refroidissement de l'ensemble de fabrication est passif. Par exemple, le refroidissement est réalisé en arrêtant le chauffage et en laissant le premier outil de réalisation refroidir.

Le moule est ensuite ouvert et la couche de structure 30 est démoulée.

Lorsque l'élément de protection 20 comprend une peau 40 et/ou une couche de revêtement 50, la réalisation du corps 24 et donc de l'élément de protection 20 est achevée dans le deuxième outil de réalisation.

Le deuxième outil de réalisation comprend au moins une première partie définissant une première surface de formage présentant la forme de la surface externe 26 de l'élément de protection 20 à réaliser. En outre, la première surface de formage peut être agencée pour appliquer un aspect particulier sur la surface externe 26 de l'élément de protection 20, par exemple en présentant un grainage et/ou un motif localisé, tel qu'un logo ou autre, s'étendant en saillie ou en creux sur la première surface de formage.

Les différentes étapes du procédé décrit ci-dessous peuvent être réalisée alors que le deuxième outil de réalisation, notamment la première surface de formage, est chauffé par exemple à une température voisine de 70°C.

La couche de revêtement 50 est réalisée par application d'au moins une couche de peinture sur la première surface de formage de sorte que la couche de revêtement 50 adopte la forme de la première surface de formage. L'application de la couche de peinture se fait par exemple par pulvérisation. Lorsque la couche de revêtement 50 comprend plusieurs sous-couches de base et/ou de sous-couche de vernissage, celles-ci sont appliquées successivement sur la première surface de formage de l'extérieur vers l'intérieur, c'est-à-dire que la sous-couche formant la surface externe 26, par exemple une sous-couche de vernis, est appliquée d'abord sur la première surface de formage puis que la sous-couche s'étendant immédiatement contre cette première sous-couche, par exemple une sous-couche de base définissant la couleur de la surface externe 26, est appliquée contre la première sous-couche tapissant la première surface de formage. Le chauffage de la première surface de formage permet d'obtenir un séchage rapide de la couche de revêtement 50.

Selon un mode de réalisation, un agent démoulant est d'abord appliqué sur la première surface de formage avant la réalisation de la couche de revêtement 50 et la ou les sous-couches de base et/ou de vernissage sont appliquées sur l'agent démoulant tapissant la première surface de formage. Un tel agent démoulant est par exemple appliqué par pulvérisation sur la première surface de formage et permet de faciliter le retrait de l'élément de protection 20 réalisé du deuxième outil de réalisation, comme cela sera décrit ultérieurement.

Le cas échéant, la peau 40 est ensuite appliquée contre la face interne 51 de la couche de revêtement 50. La peau 40 est appliquée, par exemple par pulvérisation du matériau dépourvu d'eau formant la peau 40 contre la face interne 51 de la couche de revêtement 50, par exemple alors que celle-ci n'est pas encore sèche afin d'assurer l'adhésion entre la peau 40 et la couche de revêtement 50. Le matériau de la peau 40 est maintenue à l'état visqueux après son application et avant l'application de la couche de structure 30, par exemple du fait du chauffage de la première partie de l'outil de réalisation.

La couche de structure 30 est ensuite appliquée sur la face interne 41 de la peau 40 ou sur la face interne 51 de la couche de revêtement 50 lorsque l'élément de protection 20 est dépourvu de peau 40.

Selon un mode de réalisation, la couche de structure 30 est appliquée sur la face interne 41 de la peau 40 ou de la couche de revêtement 50 après que la couche de structure 30 se soit solidifiée après refroidissement dans le premier outil de réalisation. Selon une variante, lorsque le corps 24 ne comprend pas de peau 40, un film collant est appliqué entre la couche de structure 30 et la couche de revêtement 50 pour assurer leur fixation entre elles.

Selon un mode de réalisation, la couche de structure 30 est préformée avant l'application sur la face interne 41 de la peau 40 pour acquérir la forme de la surface interne 25 du corps 24. Dans ce cas, cet ensemble est placé contre une deuxième surface de formage d'une deuxième partie du deuxième outil de réalisation, la deuxième surface de formage présentant la forme de la surface interne 25 du corps 24. Ainsi, au moins la face interne 31 de la couche de structure 30 acquière la forme de la surface interne 25 du corps 24. Comme la première partie du deuxième outil de réalisation, la deuxième partie du deuxième outil de réalisation peut être chauffée.

L'élément de protection 20 est ensuite réalisé en approchant la deuxième partie du deuxième outil de réalisation de la première partie du deuxième outil de réalisation de sorte à faire adhérer la couche de structure 30 sur la face interne 41 de la peau 40. Après refroidissement et durcissement de la peau 40 et de la couche de structure 30, l'élément de protection 20 forme un ensemble cohérent dans lequel la couche de structure 30, la peau 40 et la couche de revêtement 50 sont fixés les uns aux autres. Le deuxième outil de réalisation peut être ouvert et l'élément de protection 20 peut être retiré du deuxième outil de réalisation, cette opération étant facilitée lorsqu'un agent de démoulage a été appliqué sur la première surface de formage. L'élément de protection 20 peut alors être utilisé sur un siège.

En variante, la couche de structure 30 est d'abord appliquée sur la face interne 41 de la peau 40 puis la deuxième partie de l'outil de réalisation est rapprochée de la première partie de l'outil de réalisation de sorte à appliquer la deuxième surface de formage sur la face interne 31 de la couche de structure 30 afin de lui en conférer sa forme et de sorte à solidariser la couche de structure 30 à la peau 40.

Par la suite, l'élément de protection 20 est monté sur l'élément de support 12 qu'il est destiné à protéger. Par exemple, le corps 24 de l'élément de protection 20 est fixé sur l'élément de support 12 par l'intermédiaire des moyens de fixations du corps 24.

L'élément de protection 20 proposé par l'invention présente une dureté optimisée et un poids relativement faible.

En outre, l'élément de protection 20 présente un impact environnemental réduit. L'utilisation d'éléments discrets de structures 34 solidarisés entre eux par des fibres de liaison 35 pour la réalisation du corps 24 offre des alternatives à un moulage classique à partir d'une mousse thermodurcissable vierge.

## Revendications

1. Elément de protection (20) d'un véhicule comprenant un corps (24), le corps (24) comprenant au moins une couche de structure (30) comportant une face interne (31) destinée à être tournée vers un élément de support (12) et une face externe (32) opposée
à la face interne (31), la couche de structure (30) comportant une pluralité d'éléments discrets de structure (34) et une pluralité de fibres de liaison (35), les éléments discrets de structure (34) étant solidarisés entre eux par l'intermédiaire des fibres de liaison (35), les éléments discrets de structure (34) et les fibres de liaisons (35) étant comprimés, **caractérisé en ce que** l'élément de protection (20) est un élément de protection (20) d'un siège (10) du véhicule, destiné à être fixé sur un élément de support (12) du siège (10),
la dureté du corps (24) étant sensiblement supérieure ou égale à 50 shore A, de préférence comprise entre 50 shore A et 90 shore A,
les éléments discrets de structure (34) étant formés par un matériau de structure en mousse et/ou en fibres de structure et/ou en textile, les fibres de liaison (35) comprenant une âme centrale et une enveloppe recouvrant l'âme, l'enveloppe étant réalisée en un matériau fondant lorsqu'il est soumis à une température de fonte, l'enveloppe comprenant au moins une portion d'attache (39) fixée à au moins un élément discret de structure (34) et/ou à au moins une autre fibre de liaison (35), les fibres de structure étant formées par une âme nue, l'âme nue ne fondant pas lorsqu'elle est soumise à la température de fonte.

2. Elément de protection (20) selon la revendication 1, dans lequel le corps (24) comprend au moins une peau (40), la peau (40) comportant une face interne (41) et une face externe (42), la face interne (41) de la peau (40) s'étendant sur au moins une partie de la face externe (32) de la couche de structure (30).

3. Elément de protection (20) selon la revendication 2, dans lequel la peau (40) est formée par un matériau synthétique.

4. Elément de protection (20) selon la revendication 3, dans lequel le matériau de le peau (40) comprend des pigments de couleur.

5. Elément de protection (20) selon l'une quelconque des revendications 2 à 4, dans lequel le corps (24) comprend au moins une couche de revêtement (50), la couche de revêtement (50) étant formée par un matériau de revêtement, la couche de revêtement (50) comportant une face interne (51) et une face externe (52), la face interne (51) de la couche de revêtement (50) s'étendant sur au moins une partie de la face externe (52) de la peau (40).

6. Elément de protection (20) selon la revendication 5, dans lequel le matériau de revêtement est une peinture à base d'eau ou une peinture à base de solvant.

7. Elément de protection (20) selon l'une quelconque des revendications 1 à 6, dans lequel l'épaisseur (e) du corps (24) est comprise entre 1 mm et 15 mm.

8. Siège (10) d'un véhicule comprenant au moins un élément de support (12), l'au moins un élément de support (12) étant une assise (14), un dossier (16) ou un appui-tête (18), et au moins un élément de protection (20) selon l'une quelconque des revendications 1 à 7, s'étendant sur au moins une partie de l'élément de support (12).

9. Procédé de fabrication d'un élément de protection (20) d'un véhicule, l'élément de protection (20) comprenant un corps (24), le corps (24) comprenant au moins une couche de structure (30) comportant une face interne (31) destinée à être tournée vers un élément de support (12) et une face externe (32) opposée à la face interne (31), la couche de structure (30) comportant une pluralité d'éléments discrets de structure (34) et une pluralité de fibres de liaison (35),
le procédé comprenant les étapes de :
- fourniture des éléments discrets de structure (34) et des fibres de liaison (35) ;
- mélange des éléments discrets de structure (34) et des fibres de liaison (35) pour former un ensemble de fabrication, les éléments discrets de structure (34) et les fibres de liaison (35) étant mélangés dans des proportions spécifiques de sorte que la dureté du corps (24) soit sensiblement supérieure ou égale à 50 shore A ;
- formation du corps (24) à partir de l'ensemble de fabrication, la formation du corps (24) comprenant la solidarisation des éléments discrets de structure (34) entre eux par l'intermédiaire des fibres de liaison (35), la solidarisation comprenant la compression des éléments discrets de structure (34) et des fibres de liaison (35) pour former la couche de structure (30),
**caractérisé en ce que** l'élément de protection (20) est un élément de protection (20) d'un siège (10) du véhicule, destiné à être fixé sur un élément de support (12) du siège (10), la dureté du corps (24) étant sensiblement supérieure ou égale à 50 shore A, de préférence comprise entre 50 shore A et 90 shore A,
les éléments discrets de structure (34) étant formés par un matériau de structure en mousse et/ou en fibres de structure et/ou en textile, les fibres de liaison (35) comprenant une âme centrale et une enveloppe recouvrant l'âme, l'enveloppe étant réalisée en un matériau fondant lorsqu'il est soumis à une température de fonte, l'enveloppe comprenant au moins une portion d'attache (39) fixée à au moins un élément discret de structure (34) et/ou à au moins une autre fibre de liaison (35), les fibres de structure étant formées par une âme nue, l'âme nue ne fondant pas lorsqu'elle est soumise à la température de fonte,
la solidarisation des éléments discrets de structure (34) entre eux par l'intermédiaire des fibres de liaison (35) comprenant la compression de l'ensemble de fabrication dans un moule et un chauffage de l'ensemble de fabrication dans le moule à la température de fonte pour fondre au moins partiellement les fibres de liaison (35), en particulier l'enveloppe des fibres de liaison (35).

10. Procédé selon la revendication 9, dans lequel l'étape de formation du corps (24) comprend, en outre, les sous-étapes de :
- formation d'une couche de revêtement (50) en appliquant un matériau de revêtement contre une première surface de formage d'un outil de réalisation, ladite première surface de formage présentant la forme d'une surface externe (26) de l'élément de protection (20) à fabriquer ;
- application d'une peau (40) contre une face interne (51) de la couche de revêtement (50) ; et
- application de la couche de structure (30) contre une face interne (41) de la peau (40).

## Patentansprüche

1. Schutzelement (20) für ein Fahrzeug, einen Körper (24) umfassend, wobei der Körper (24) mindestens eine Strukturschicht (30) umfasst, die eine Innenfläche (31) aufweist, die dazu bestimmt ist, einem Stützelement (12) zugewandt zu sein, und eine der Innenfläche (31) gegenüberliegende Außenfläche (32), wobei die Strukturschicht (30) eine Vielzahl von diskreten Strukturelementen (34) und eine Vielzahl von Bindefasern (35) umfasst, wobei die diskreten Strukturelemente (34) über die Bindefasern (35) miteinander verbunden sind, wobei die diskreten Strukturelemente (34) und die Bindefasern (35) komprimiert sind,
**dadurch gekennzeichnet, dass** das Schutzelement (20) ein Schutzelement (20) eines Fahrzeugsitzes (10) ist, das dazu bestimmt ist, an einem Stützelement (12) des Sitzes (10) befestigt zu werden, wobei die Härte des Körpers (24) im Wesentlichen größer als oder gleich 50 Shore A ist, vorzugsweise zwischen 50 Shore A und 90 Shore A,
wobei die diskreten Strukturelemente (34) durch ein Strukturmaterial gebildet werden, das aus Schaum und/oder Strukturfasern und/oder Textilien hergestellt ist, wobei die Bindefasern (35) einen zentralen Kern und eine den Kern bedeckende Umhüllung umfassen, wobei die Umhüllung aus einem Material hergestellt ist, das schmilzt, wenn es einer Schmelztemperatur ausgesetzt wird, wobei die Umhüllung mindestens einen Befestigungsabschnitt (39) umfasst, der an mindestens einem diskreten Strukturelement (34) und/oder an mindestens einer anderen Bindefaser (35) befestigt ist, wobei die Strukturfasern durch einen blanken Kern gebildet werden, wobei der blanke Kern nicht schmilzt, wenn er der Schmelztemperatur ausgesetzt wird.

2. Schutzelement (20) nach Anspruch 1, wobei der Körper (24) mindestens eine Oberfläche (40) umfasst, wobei die Oberfläche (40) eine Innenfläche (41) und eine Außenfläche (42) aufweist, wobei sich die Innenfläche (41) der Oberfläche (40) über mindestens einen Teil der Außenfläche (32) der Strukturschicht (30) erstreckt.

3. Schutzelement (20) nach Anspruch 2, wobei die Oberfläche (40) aus einem synthetischen Material gebildet ist.

4. Schutzelement (20) nach Anspruch 3, wobei das Material der Oberfläche (40) Farbpigmente umfasst.

5. Schutzelement (20) nach einem der 2 bis 4, wobei der Körper (24) mindestens eine Beschichtungsschicht (50) umfasst, wobei die Beschichtungsschicht (50) durch ein Beschichtungsmaterial gebildet wird, wobei die Beschichtungsschicht (50) eine Innenfläche (51) und eine Außenfläche (52) aufweist, wobei sich die Innenfläche (51) der Beschichtungsschicht (50) über mindestens einen Teil der Außenfläche (52) der Oberfläche (40) erstreckt.

6. Schutzelement (20) nach Anspruch 5, wobei das Beschichtungsmaterial eine wasserbasierte Farbe oder eine lösungsmittelbasierte Farbe ist.

7. Schutzelement (20) nach einem der Ansprüche 1 bis 6, wobei die Dicke (e) des Körpers (24) zwischen 1 mm und 15 mm liegt.

8. Fahrzeugsitz (10), umfassend mindestens ein Stützelement (12), wobei das mindestens eine Stützelement (12) eine Sitzfläche (14), eine Rückenlehne (16) oder eine Kopfstütze (18) und mindestens ein Schutzelement (20) nach einem der Ansprüche 1 bis 7, das sich über mindestens einen Teil des Stützelements (12) erstreckt, ist.

9. Verfahren zur Herstellung eines Schutzelements (20) für ein Fahrzeug, wobei das Schutzelement (20) einen Körper (24) umfasst, wobei der Körper (24) mindestens eine Strukturschicht (30) umfasst, die eine Innenfläche (31) aufweist, die dazu bestimmt ist, einem Stützelement (12) zugewandt zu sein, und eine Außenfläche (32) gegenüber der Innenfläche (31), wobei die Strukturschicht (30) eine Vielzahl von diskreten Strukturelementen (34) und eine Vielzahl von Bindefasern (35) umfasst,
wobei das Verfahren die folgenden Schritte umfasst:
- Bereitstellen von diskreten Strukturelementen (34) und Bindefasern (35);
- Mischen der diskreten Strukturelemente (34) und der Bindefasern (35) zur Bildung einer Herstellungsanordnung, wobei die diskreten Strukturelemente (34) und die Bindefasern (35) in spezifischen Verhältnissen gemischt werden, so dass die Härte des Körpers (24) im Wesentlichen größer als oder gleich 50 Shore A ist;
- Bilden des Körpers (24) aus der Herstellungsanordnung, wobei die Bildung des Körpers (24) das Verbinden der diskreten Strukturelemente (34) miteinander über die Bindefasern (35) umfasst, wobei das Verbinden das Komprimieren der diskreten Strukturelemente (34) und der Bindefasern (35) zur Bildung der Strukturschicht (30) umfasst,
**dadurch gekennzeichnet, dass** das Schutzelement (20) ein Schutzelement (20) eines Fahrzeugsitzes (10) ist, das dazu bestimmt ist, an einem Stützelement (12) des Sitzes (10) befestigt zu werden, wobei die Härte des Körpers (24) im Wesentlichen größer als oder gleich 50 Shore A ist, vorzugsweise zwischen 50 Shore A und 90 Shore A,
die diskreten Strukturelemente (34) durch ein Strukturmaterial gebildet werden, das aus Schaum und/oder Strukturfasern und/oder Textilien hergestellt ist, wobei die Bindefasern (35) einen zentralen Kern und eine den Kern bedeckende Umhüllung umfassen, wobei die Umhüllung aus einem Material hergestellt ist, das schmilzt, wenn es einer Schmelztemperatur ausgesetzt wird, wobei die Umhüllung mindestens einen Befestigungsabschnitt (39) umfasst, der an mindestens einem diskreten Strukturelement (34) und/oder an mindestens einer anderen Bindefaser (35) befestigt ist, wobei die Strukturfasern durch einen blanken Kern gebildet werden, wobei der blanke Kern nicht schmilzt, wenn er der Schmelztemperatur ausgesetzt wird,
die Verbindung der diskreten Strukturelemente (34) miteinander über die Bindefasern (35) das Komprimieren der Herstellungsanordnung in einer Form umfasst und das Erhitzen der Herstellungsanordnung in der Form auf die Schmelztemperatur, um die Bindefasern (35), insbesondere die Umhüllung der Bindefasern (35), zumindest teilweise zu schmelzen.

10. Verfahren nach Anspruch 9, wobei der Schritt des Formens des Körpers (24) ferner die folgenden Unterschritte umfasst:
- Bilden einer Beschichtungsschicht (50) durch Aufbringen eines Beschichtungsmaterials auf einer ersten Formoberfläche eines Formwerkzeugs, wobei die erste Formoberfläche die Form einer Außenfläche (26) des herzustellenden Schutzelements (20) aufweist;
- Aufbringen einer Oberfläche (40) auf einer Innenfläche (51) der Beschichtungsschicht (50); und
- Aufbringen der Strukturschicht (30) auf einer Innenfläche (41) der Oberfläche (40).

## Claims

1. Protective element (20) for a vehicle comprising a body (24), the body (24) comprising at least one structural layer (30) having an inner face (31) intended to face a support element (12) and an outer face (32) opposite the inner face (31), the structural layer (30) comprising a plurality of discrete structural elements (34) and a plurality of binding fibers (35), the discrete structural elements (34) being bonded to one another via the binding fibers (35), the discrete structural elements (34) and the binding fibers (35) being compressed,
**characterized in that** the protective element (20) is a protective element (20) of a vehicle seat (10), intended to be fixed to a support element (12) of the seat (10), the hardness of the body (24) being substantially greater than or equal to 50 shore A, preferably between 50 shore A and 90 shore A,
the discrete structural elements (34) being formed by a structural material made of foam and/or structural fibers and/or textiles, the binding fibers (35) comprising a central core and a sheath covering the core, the sheath being made of a material which melts when subjected to a melting temperature, the sheath comprising at least one attachment portion (39) fixed to at least one discrete structural element (34) and/or to at least one other binding fiber (35), the structural fibers being formed by a bare core, the bare core not melting when subjected to the melting temperature.

2. Protective element (20) according to claim 1, wherein the body (24) comprises at least one skin (40), the skin (40) having an inner face (41) and an outer face (42), the inner face (41) of the skin (40) extending over at least part of the outer face (32) of the structural layer (30).

3. Protective element (20) according to claim 2, wherein the skin (40) is formed by a synthetic material.

4. Protective element (20) according to claim 3, wherein the material of the skin (40) comprises color pigments.

5. Protective element (20) according to any of claims 2 to 4, wherein the body (24) comprises at least one coating layer (50), the coating layer (50) being formed by a coating material, the coating layer (50) having an inner face (51) and an outer face (52), the inner face (51) of the coating layer (50) extending over at least part of the outer face (52) of the skin (40).

6. Protective element (20) according to claim 5, wherein the coating material is a water-based paint or a solvent-based paint.

7. Protective element (20) according to any of claims 1 to 6, wherein the thickness (e) of the body (24) is between 1 mm and 15 mm.

8. Vehicle seat (10) comprising at least one support element (12), the at least one support element (12) being a seat bottom (14), a backrest (16) or a headrest (18), and at least one protective element (20) according to any of claims 1 to 7, extending over at least part of the support element (12).

9. Method for manufacturing a protective element (20) for a vehicle, the protective element (20) comprising a body (24), the body (24) comprising at least one structural layer (30) having an inner face (31) intended to face a support element (12) and an outer face (32) opposite the inner face (31), the structural layer (30) comprising a plurality of discrete structural elements (34) and a plurality of binding fibers (35),
the method comprising the steps of:
- supplying discrete structural elements (34) and binding fibers (35);
- mixing the discrete structural elements (34) and the binding fibers (35) to form a manufacturing assembly, the discrete structural elements (34) and the binding fibers (35) being mixed in specific proportions so that the hardness of the body (24) is substantially greater than or equal to 50 shore A;
- forming the body (24) from the manufacturing assembly, the formation of the body (24) comprising bonding the discrete structural elements (34) to one another via the binding fibers (35), the bonding comprising compressing the discrete structural elements (34) and the binding fibers (35) to form the structural layer (30),
**characterized in that** the protective element (20) is a protective element (20) of a vehicle seat (10), intended to be fixed to a support element (12) of the seat (10), the hardness of the body (24) being substantially greater than or equal to 50 shore A, preferably between 50 shore A and 90 shore A,
the discrete structural elements (34) being formed by a structural material made of foam and/or structural fibers and/or textiles, the binding fibers (35) comprising a central core and a sheath covering the core, the sheath being made of a material which melts when subjected to a melting temperature, the sheath comprising at least one attachment portion (39) fixed to at least one discrete structural element (34) and/or to at least one other binding fiber (35), the structural fibers being formed by a bare core, the bare core not melting when subjected to the melting temperature,
the bonding of the discrete structural elements (34) to one another via the binding fibers (35) comprising compressing the manufacturing assembly in a mold and heating the manufacturing assembly in the mold to the melting temperature to at least partially melt the binding fibers (35), in particular the sheath of the binding fibers (35).

10. Method according to claim 9, wherein the step of forming the body (24) further comprises the sub-steps of:
- forming a coating layer (50) by applying a coating material against a first forming surface of a forming tool, said first forming surface having the shape of an outer surface (26) of the protective element (20) to be manufactured;
- applying a skin (40) against an inner face (51) of the coating layer (50); and
- applying the structural layer (30) against an inner face (41) of the skin (40).
